# EUROPEAN PATENT APPLICATION

(11) **EP 4 811 405 A1**
(43) Date of publication of application: **23.09.2026**
(21) Application number: 26165162.4
(22) Date of filing: 16.03.2026
(51) Int. Cl.: H01G 2/06, H01G 4/002, H01G 4/012, H01G 4/232, H01G 4/30

(54) **A MULTILAYER CERAMIC CAPACITOR WHOSE BASE IS WIDER THAN ITS TOP**

(30) Priority: 21.03.2025 JP 2025047357
(71) Applicant: Murata Manufacturing Co., Ltd., Nagaokakyo-shi, Kyoto 617-8555 (JP)
(72) Inventor: SAITO, Yuki, 617-8555 Nagaokakyo-shi, Kyoto (JP)
(74) Representative: Stöckeler, Ferdinand

(57) **Abstract**

A multilayer ceramic capacitor (1) includes a multilayer body (10) having a first surface P1 and a second surface P2 that face oppositely in a lamination direction T and a fifth surface P5 and a sixth surface P6 that face oppositely in a second direction D2 orthogonally intersecting the lamination direction T. The multilayer ceramic capacitor (1) also includes a pair of outer electrodes (40) connected to first inner electrodes (31) and to second inner electrodes (32), respectively. The size of the multilayer body (10) in the lamination direction T is greater than the size thereof in the second direction D2. The multilayer body (10) includes inner electrodes (30) arranged in the lamination direction T, and an amount of deviation of an end of each inner electrode 30 in the second direction D2 is 0.5 µm or less. When the multilayer body (10) is divided into a region R1 closer to the first surface P1 and a region R2 closer to the second surface P2, the concentration of an additive being present between the fifth surface P5 and the first inner electrodes (31) is higher in the region R2 than in the region R1.

## Description

### BACKGROUND OF THE INVENTION

### 1. Field of the Invention

The present invention relates to a multilayer ceramic capacitor.

### 2. Description of the Related Art

Multilayer ceramic capacitors have been widely used in electronic devices, such as mobile phones and portable music players. A type of multilayer ceramic capacitor includes an inner-layer portion in which multiple inner electrodes and multiple dielectric layers made of a ceramic material are laminated to produce capacitance. The multilayer ceramic capacitor also includes outer layers disposed so as to sandwich the inner-layer portion in the lamination direction and side-margin portions disposed at both sides of the inner-layer portion.

High-performance electronic devices have been subjected to downsizing in recent years, which has created a demand for multilayer ceramic capacitors with an increased capacitance. In order to increase the capacitance of the multilayer ceramic capacitor, a known multilayer ceramic capacitor increases the number of the dielectric layers and the inner electrodes (for example, see International Publication No. 2024/204809).

### SUMMARY OF THE INVENTION

However, the increase of the number of the dielectric layers and the inner electrodes causes the size of the multilayer body to increase in the lamination direction. This causes the multilayer ceramic capacitor to incline easily during mounting and leads to unstable mounting on a circuit board.

Accordingly, it is an object of the present invention to provide a multilayer ceramic capacitor that facilitates reliable mounting while increasing capacitance.

The present inventors have found that a multilayer ceramic capacitor of which the size of a multilayer body in the lamination direction is large can be mounted on a circuit board reliably by adjusting, for example, the shape of the multilayer body or the concentration of additives contained therein, which has led to the present invention.

According to an aspect of the present invention, a multilayer ceramic capacitor includes a multilayer body having a first surface and a second surface that face oppositely in a lamination direction, a third surface and a fourth surface that face oppositely in a first direction orthogonally intersecting the lamination direction, and a fifth surface and a sixth surface that face oppositely in a second direction orthogonally intersecting the lamination direction and the first direction. The multilayer ceramic capacitor also includes a first outer electrode disposed on the third surface and a second outer electrode disposed on the fourth surface. In the multilayer ceramic capacitor, a dimension of the multilayer body in the lamination direction is greater than a dimension thereof in the second direction. The multilayer body includes therein inner electrodes arranged in the lamination direction, and an amount of deviation of an end of each inner electrode in the second direction is 0.5 µm or less. Dielectric ceramic particles are present between the fifth surface and the inner electrodes. When the multilayer body is divided in the lamination direction equally into a region R1 closer to the first surface and a region R2 closer to the second surface, a concentration of an additive being present between the fifth surface and the inner electrodes is higher in the region R2 than in the region R1.

### Advantageous Effects of the Invention

According to the present invention, a multilayer ceramic capacitor that facilitates reliable mounting while increasing capacitance can be provided.

### BRIEF DESCRIPTION OF THE DRAWINGS

Fig. 1 is a perspective view illustrating a multilayer ceramic capacitor according to an embodiment;
Fig. 2 is a cross-sectional view (LT cross-section) of the multilayer ceramic capacitor 1 illustrated in Fig. 1 taken along line II-II;
Fig. 3 is a cross-sectional view (WT cross-section) of the multilayer ceramic capacitor 1 illustrated in Fig. 1 taken along line III-III;
Fig. 4 is a cross-sectional view (LW cross-section) of the multilayer ceramic capacitor 1 illustrated in Fig. 3 taken along line IV-IV;
Fig. 5 is a cross-sectional view (WT cross-section) of the multilayer ceramic capacitor 1 illustrated in Fig. 2 taken along line V-V;
Fig. 6 is a view illustrating the exterior of a multilayer body 10 according to a first embodiment as viewed in a second direction D2;
Fig. 7 is a view illustrating the exterior of a multilayer body 10 according to a second embodiment as viewed in the second direction D2;
Fig. 8 is a view illustrating the exterior of a multilayer body 10 according to a third embodiment as viewed in the second direction D2;
Fig. 9 is a view illustrating two patterns of inner electrodes formed on dielectric sheets;
Fig. 10 is a view for explaining a process of forming the multilayer ceramic capacitor of Fig. 1; and
Fig. 11 is another view for explaining the process of forming the multilayer ceramic capacitor of Fig. 1.

### DESCRIPTION OF THE PREFERRED EMBODIMENTS

Embodiments of the multilayer ceramic capacitor of the present invention will be described. The present invention, however, is not limited to these embodiments. The drawings may be provided in a simplified and schematic manner to explain the contents of the invention, and the dimensional ratios of elements or between these elements illustrated do not necessarily match the dimensional ratios of those described in the specification. The elements or the number of elements described in the specification may be omitted in the drawings.

### Multilayer Ceramic Capacitor

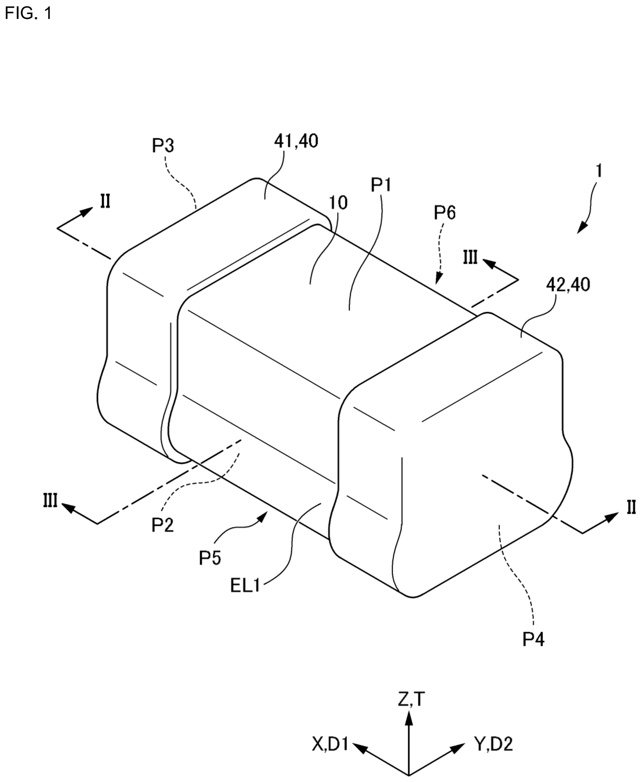

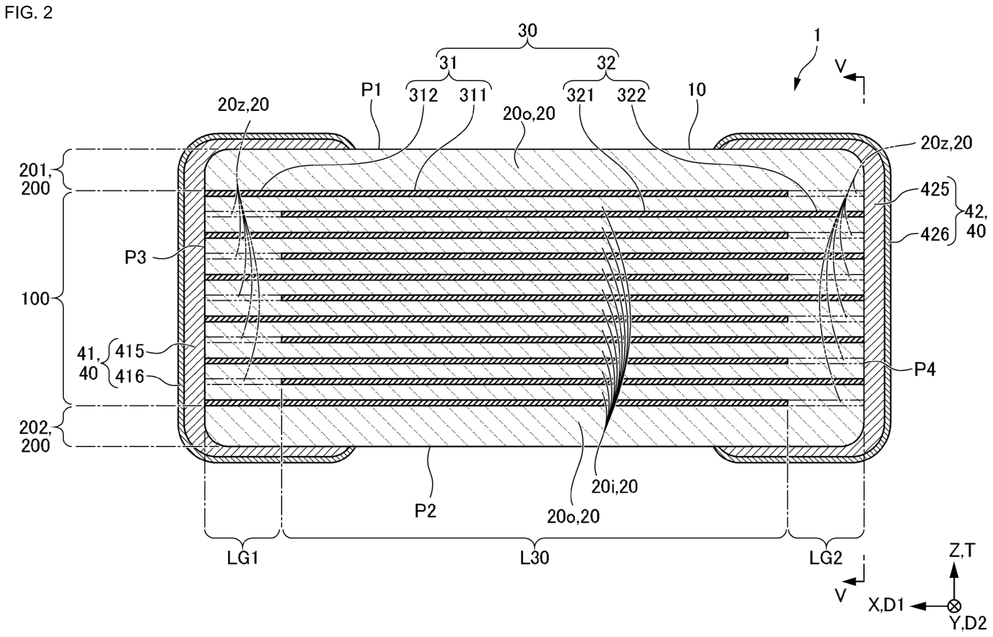

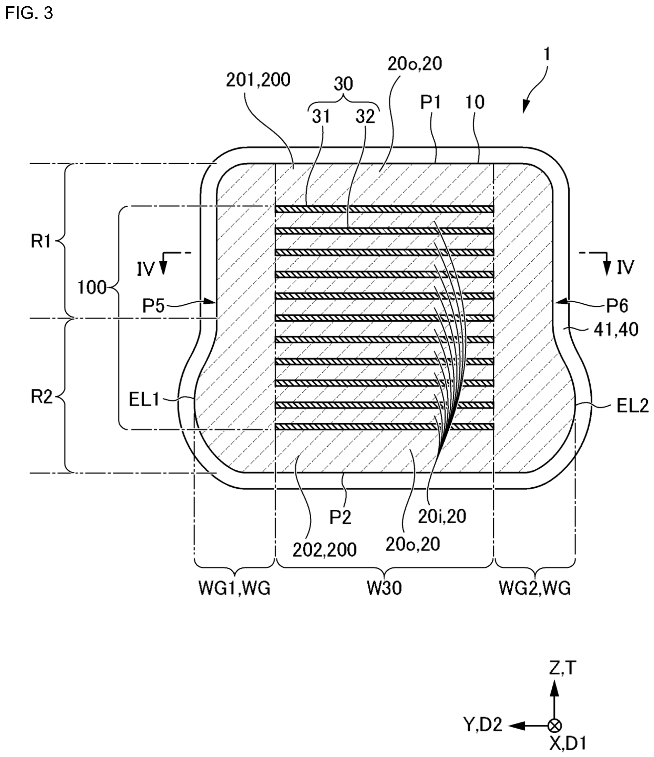

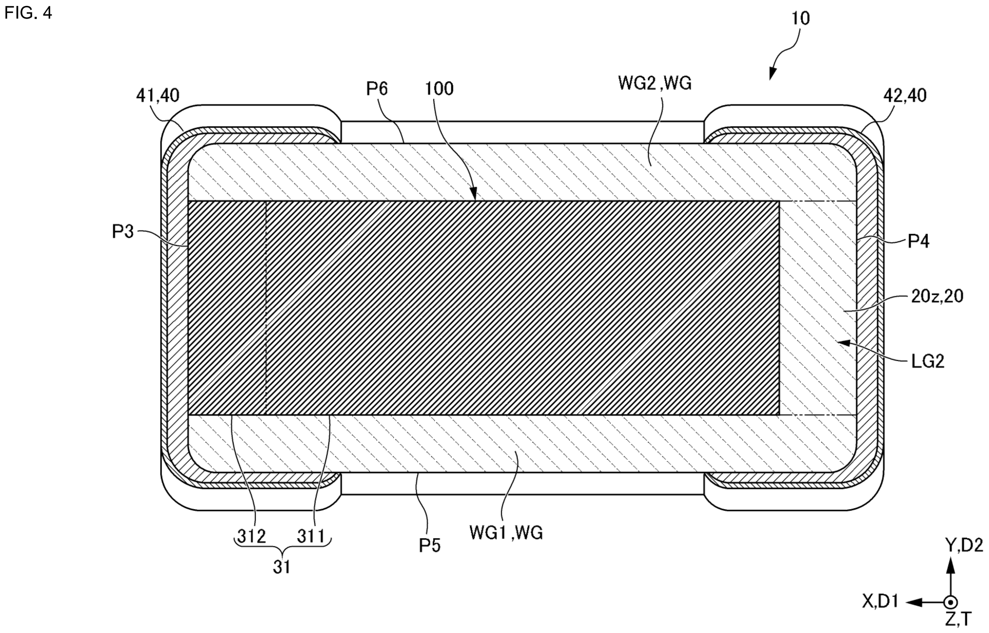

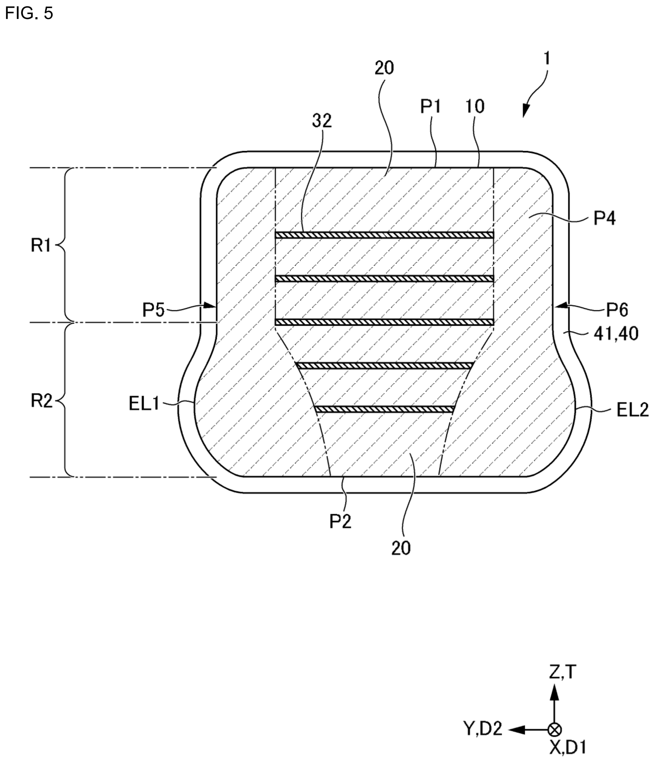

Fig. 1 is a perspective view illustrating a multilayer ceramic capacitor. Fig. 2 is a cross-sectional view of the multilayer ceramic capacitor of Fig. 1 taken along line II-II, and Fig. 3 is a cross-sectional view of the multilayer ceramic capacitor of Fig. 1 taken along line III-III. Fig. 4 is a cross-sectional view of the multilayer ceramic capacitor of Fig. 3 taken along line IV-IV. Fig. 5 is a cross-sectional view of the multilayer ceramic capacitor of Fig. 2 taken along line V-V. The multilayer ceramic capacitor 1 illustrated in Figs. 1 to 5 includes a multilayer body 10 and outer electrodes 40. The outer electrodes 40 include a first outer electrode 41 and a second outer electrode 42.

Figs. 1 to 5 show an XYZ Cartesian coordinate system. The X direction is a first direction D1 of the multilayer ceramic capacitor 1 and the multilayer body 10, the Y direction is a second direction D2 of the multilayer ceramic capacitor 1 and the multilayer body 10, and the Z direction is the lamination direction T of the multilayer ceramic capacitor 1 and the multilayer body 10. The cross-section of Fig. 2 is referred to as the "LT cross-section", the cross-section of Fig. 3 as the "WT cross-section", and the cross-section of Fig. 4 as the "LW cross-section".

Note that the first direction D1, the second direction D2, and the lamination direction T intersect each other but are not necessarily orthogonal to each other.

The multilayer ceramic capacitor described in embodiments has a dimension of 0.6 mm to 1.0 mm in the first direction D1, a dimension of 0.3 mm to 0.5 mm in the second direction D2, and a dimension of 0.5 mm to 0.8 mm in the lamination direction T. The ratio of the dimension (t1) in the lamination direction T to the dimension (w1) in the second direction D2 (i.e., t1/w1) is 1.1 or more and 1.7 or less.

### Multilayer Body

The multilayer body 10 is shaped like a cuboid and has a first surface P1 and a second surface P2 that face oppositely in the lamination direction T, a fifth surface P5 and a sixth surface P6 that face oppositely in the second direction D2, and a third surface P3 and a fourth surface P4 that face oppositely in the first direction D1. Note that each surface may have irregularities or may be roughened.

It is preferable that the corners and edges of the multilayer body 10 be rounded. The edges are portions where two surfaces of the multilayer body 10 intersect, and the corners are portions where three surfaces of the multilayer body 10 intersect.

As illustrated in Figs. 2 and 3, the multilayer body 10 includes multiple inner dielectric layers 20i and multiple inner electrodes 30 that are laminated in the lamination direction T. In the lamination direction T, the multilayer body 10 includes an inner-layer portion 100, a first outer layer 201, and a second outer layer 202 that are disposed such that the inner-layer portion 100 is sandwiched by the first outer layer 201 and the second outer layer 202.

The inner-layer portion 100 includes multiple inner dielectric layers 20i and multiple inner electrodes 30. The inner-layer portion 100 is a region in which the inner dielectric layers 20i and the inner electrodes 30 are laminated alternately and that is interposed between the outermost inner electrodes 30 positioned oppositely in the lamination direction T. In the inner-layer portion 100, the inner electrodes 30 are disposed so as to oppose one another with an inner dielectric layer 20i being interposed therebetween. Accordingly, the inner-layer portion 100 is the portion that produces capacitance and virtually functions as a capacitor.

The first outer layer 201 is disposed on the first surface P1 side of the multilayer body 10, and the second outer layer 202 is disposed on the second surface P2 side of the multilayer body 10. More specifically, the first outer layer 201 is disposed between the first surface P1 and the inner electrode 30 positioned closest to the first surface P1, and the second outer layer 202 is disposed between the second surface P2 and the inner electrode 30 positioned closest to the second surface P2. The first outer layer 201 and the second outer layer 202 are made of dielectric layers 20o and do not include any inner electrode 30. Dummy electrodes that do not oppose one another in the lamination direction T may be disposed in the first outer layer 101 and in the second outer layer 202.

It is preferable that the inner dielectric layers 20i and the dielectric layers 20o be made of the same dielectric material. The amount of additives may be different between the inner dielectric layers 20i and the dielectric layers 20o.

The dielectric layers 20 may be made of a dielectric ceramic material containing, for example, BaTiO₃, CaTiO₃, SrTiO₃, or CaZrO₃ as a main ingredient. For example, the material of the dielectric layers 20 may include, as additives of secondary ingredients, a Mn compound, a Ni compound, an Fe compound, a Cr compound, a Co compound, a Mg compound, a Si compound, an Al compound, a V compound, or a rare earth compound.

For example, the thickness of each dielectric layer 20 is not specifically limited but may preferably be 0.3 µm or more and 5.0 µm or less and more preferably be 0.3 µm or more and 2.0 µm or less. For example, the number of dielectric layers 20 is not specifically limited but may preferably be 100 or more and 2000 or less. Note that the above number of dielectric layers 20 includes the number of the inner dielectric layers 20i in the inner-layer portion 100 and the number of the dielectric layers 20o in the outer layers 200.

The inner electrodes 30 include first inner electrodes 31 and second inner electrodes 32.

Each of the first inner electrodes 31 includes an opposing portion 311 and an extension portion 312, and each of the second inner electrodes 32 includes an opposing portion 321 and an extension portion 322.

The opposing portion 311 of a first inner electrode 31 opposes a corresponding opposing portion 321 of a second inner electrode 32 in the lamination direction T of the multilayer body 10 with an inner dielectric layer 20i being interposed therebetween. For example, the shape of the opposing portion 311 and the shape of the opposing portion 321 are not specifically limited but may be substantially rectangular. The opposing portion 311 and the opposing portion 321 are portions that virtually produce capacitance and function as a capacitor.

In the multilayer body 10, the extension portion 312 of each first inner electrode 31 extends from the opposing portion 311 to the third surface P3 and is exposed at the third surface P3. In the multilayer body 10, the extension portion 322 of each second inner electrode 32 extends from the opposing portion 321 to the fourth surface P4 and is exposed at the fourth surface P4.

Accordingly, each first inner electrode 31 is connected to the first outer electrode 41, whereas a gap is provided between the first inner electrode 31 and the fourth surface P4 of the multilayer body 10, in other words, between the first inner electrode 31 and the second outer electrode 42. In addition, each second inner electrode 32 is connected to the second outer electrode 42, whereas a gap is provided between the second inner electrode 32 and the third surface P3 of the multilayer body 10, in other words, between the second inner electrode 32 and the first outer electrode 41.

The extension portion 312 of the first inner electrode 31 may have a tapered shape of which the length in the second direction D2 becomes smaller as it comes closer to the third surface P3, and the extension portion 322 of the second inner electrode 32 may also have a tapered shape of which the length in the second direction D2 becomes smaller as it comes closer to the fourth surface P4.

For example, the first inner electrode 31 and the second inner electrode 32 may contain at least one of metals such as Ni, Cu, Ag, Pd, Au, or an alloy such as Ag-Pd alloy, as a main ingredient or as an ingredient other than the main ingredient. Furthermore, the first inner electrodes 31 and the second inner electrodes 32 may contain, as an ingredient other than the main ingredient, particles of a dielectric material based on the dielectric material contained in the inner dielectric layers 20i. In this specification, the main ingredient metal means a metal component having the highest weight percentage.

In the second direction D2, an end portion of the first inner electrode 31 and an end portion of the second inner electrode 32 may each include a region containing Mg or Si at a higher concentration or containing more pores. An metal layer made of Sn or In may be provided around the first inner electrode 31 and the second inner electrode 32.

In the lamination direction T, the maximum distance between the second surface P2 and the inner electrode 30 positioned closest to the second surface P2 is preferably greater than the maximum distance between the first surface P1 and the inner electrode 30 positioned closest to the first surface P1. This can reduce the occurrence of vibration (noise) of the circuit board due to the electrostrictive effect of the multilayer ceramic capacitor.

The inner electrodes 30 that are arranged in the lamination direction T have ends in the second direction D2, and each of the ends of the inner electrodes 30 may deviate in the second direction D2. The amount of the deviation is 0.5 µm or less.

Whatever the shape of the fifth surface P5 or the sixth surface P6 may be, the amount of the deviation of each end of the inner electrodes 30 in the second direction D2 (the inner electrodes 30 being arranged in the lamination direction T) is 0.5 µm or less. In the WT cross-section, the fifth surface P5 or the sixth surface P6 may incline or curve with respect to a quasi-straight line connecting the ends of the inner electrodes 30.

The thickness of each inner electrode 30 is not specifically limited but may preferably be 0.30 µm or more and 0.80 µm or less and more preferably be 0.30 µm or more and 0.60 µm or less. The number of inner electrodes 30 is not specifically limited but may preferably be 10 or more and 1000 or less.

The measurement of the thicknesses of the dielectric layer 20 and the inner electrode 30 and of the amount of the deviation of the ends of the inner electrodes 30 in the second direction D2 (the inner electrodes 30 being arranged in the lamination direction T) can be made in the following manner. For example, a multilayer ceramic capacitor 1 is ground to one half from the third surface P3 or from the fourth surface P4 in the first direction D1 to expose a WT cross-section, and the WT cross-section is observed to measure the above using a scanning electron microscope. Each value may be determined by averaging measurement results at five equidistant points in the second direction D2 or by averaging measurement results at five equidistant points in the lamination direction T.

As illustrated in Fig. 3, the multilayer body 10 includes an opposing-electrode portion W30 in which the inner electrodes 30 oppose one another. The multilayer body 10 also includes a first side-margin portion WG1 and a second side-margin portion WG2 that are disposed so as to sandwich the opposing-electrode portion W30 in the second direction D2. The opposing-electrode portion W30 includes the inner-layer portion 100 in which the inner electrodes 30 and the inner dielectric layers 20i are laminated and also includes two outer layers 200 that are disposed so as to sandwich the inner-layer portion 100 in the lamination direction T. In other words, the first side-margin portion WG1 and the second side-margin portion WG2 are disposed to as to sandwich the inner-layer portion 100 and the two outer layers 200 in the second direction D2.

The first side-margin portion WG1 is positioned between the fifth surface P5 and the opposing-electrode portion W30, and the second side-margin portion WG2 is positioned between the sixth surface P6 and the opposing-electrode portion W30. More specifically, the first side-margin portion WG1 is positioned between the fifth surface P5 and the ends of the inner electrodes 30 near the fifth surface P5, and the second side-margin portion WG2 is positioned between the sixth surface P6 and the ends of the inner electrodes 30 near the sixth surface P6. The first side-margin portion WG1 and the second side-margin portion WG2 are made of a dielectric material and do not include any inner electrode. The first side-margin portion WG1 and the second side-margin portion WG2 may be referred to as "side gaps" or as "W gaps". Note that the first side-margin portion WG1 and the second side-margin portion WG2 are collectively referred to as "side-margin portions WG" where it is not necessary to differentiate these side-margin portions.

For example, the side-margin portions WG are made of dielectric ceramic particles having a perovskite compound containing Ba and Ti as a main ingredient and having a perovskite structure. It is preferable that an additive of any one of Si, Mg, Mn, V, Cr, Sn, and a rare earth be added to the above main ingredient and the additive be present among ceramic particles. Note that the side-margin portions WG may include two layers or may include three or more layers.

The side-margin portions WG contain the dielectric ceramic particles, and the dielectric ceramic particles are present between the fifth surface P5 and the inner electrodes 30 and also between the sixth surface P6 and the inner electrodes 30.

To form the side-margin portions WG, side covers SC for forming the side-margin portions WG can be attached, in the second direction D2, to both side surfaces of a multilayer chip 10T having the inner-layer portion 100 and the outer layers 200, which will be described later.

As illustrated in Fig. 2, the multilayer body 10 includes, in the first direction D1, a first end-margin portion LG1, a second end-margin portion LG2, and an opposing-electrode portion L30 in which the first inner electrodes 31 of the inner electrodes 30 oppose respective second inner electrodes 32. The first end-margin portion LG1 is positioned between the third surface P3 and the opposing-electrode portion L30, and the second end-margin portion LG2 is positioned between the fourth surface P4 and the opposing-electrode portion L30. More specifically, the first end-margin portion LG1 is positioned between the third surface P3 and the ends of the second inner electrodes 32 near the third surface P3, and the second end-margin portion LG2 is positioned between the fourth surface P4 and the ends of the first inner electrodes 31 near the fourth surface P4.

The first end-margin portion LG1 includes the dielectric layers 20 and the first inner electrodes 31 and does not include any second inner electrode 32. In forming the first end-margin portion LG1, a dielectric layer 20z, of which the thickness corresponds to that of the second inner electrode 32, is disposed at the end of each second inner electrode 32 near the third surface P3 in order to eliminate level difference. The second end-margin portion LG2 includes the dielectric layers 20 and the second inner electrodes 32 and does not include any first inner electrode 31. In forming the second end-margin portion LG2, the dielectric layer 20z, of which the thickness corresponds to that of the first inner electrode 31, is disposed at the end of each first inner electrode 31 near the fourth surface P4 in order to eliminate level difference. Note that the dielectric layers 20z are not necessarily disposed and the multilayer body 10 may be formed without providing the dielectric layers 20z.

The opposing portions 311 of the first inner electrodes 31 and the opposing portion 321 of the second inner electrodes 32 are positioned in the opposing-electrode portion L30. In addition, the extension portions 312 of the first inner electrodes 31 are positioned in the first end-margin portion LG1, and the extension portions 322 of the second inner electrodes 32 are positioned in the second end-margin portion LG2.

When the multilayer body 10 is divided into two equal regions in the lamination direction T, in other words, divided into a region R1 near the first surface P1 and a region R2 near the second surface P2, the concentration of the additive contained in a portion between the fifth surface P5 and the inner electrodes 30 is higher in the region R2 than in the region R1. The multilayer ceramic capacitor suitable for reliable mounting can be obtained by adjusting the concentration distribution of the additive in the first side-margin portion WG1 in the above-described manner.

Although the above describes the portion between the fifth surface P5 and the inner electrodes 30, the similar configuration can be applied to a portion between the sixth surface P6 and the inner electrodes 30 in the plane-symmetry manner based on the plane-symmetry relation between the portion between the fifth surface P5 and the inner electrodes 30 and the portion between the sixth surface P6 and the inner electrodes 30 with respect to an LT cross-section taken at the center of the multilayer body 10 in the second direction D2. The advantageous effect can be enhanced by adopting the similar configuration in the portion between the sixth surface P6 and the inner electrodes 30 as well as in the portion between the fifth surface P5 and the inner electrodes 30. Other configurations applicable to the portion between the fifth surface P5 and the inner electrodes 30, which will be described below, can be applied similarly to the portion between the sixth surface P6 and the inner electrodes 30 in the plane-symmetry manner based on the plane-symmetry relation with respect to the LT cross-section taken at the center of the multilayer body 10 in the second direction D2. Note that the "similar configuration" as used above is not necessarily exactly the same configuration. It is sufficient that the similar configuration has distinctive characteristics of the portion between the fifth surface P5 and the inner electrodes 30.

The maximum distance between the fifth surface P5 and the inner electrodes 30 in the second direction D2 is greater in the region R2 than in the region R1. The multilayer ceramic capacitor suitable for reliable mounting can be obtained by increasing the distance between the fifth surface P5 and the inner electrodes 30 in the region R2 near the second surface P2.

The maximum distance between the fifth surface P5 and the inner electrodes 30 in the second direction D2 is greater by 0.5 µm or more and 10.0 µm or less in the region R2 than in the region R1.

In the region R2, a sub-region where the distance between the fifth surface P5 and the inner electrodes 30 in the second direction D2 is greatest is preferably positioned 50 µm or less from the second surface P2 in the lamination direction and more preferably positioned 10 µm or more and 50 µm or less. The multilayer ceramic capacitor 1 can be mounted more reliably without inclining by shaping the multilayer ceramic capacitor 1 such that the distance between the fifth surface P5 and the inner electrodes 30 in the second direction D2 becomes maximum as described above.

The distance in the lamination direction T between the second surface P2 and the sub-region in which the distance between the fifth surface P5 and the inner electrodes 30 in the second direction D2 is greatest in the region R2 preferably differs from the distance in the lamination direction T between the second surface P2 and a sub-region in which the distance between the sixth surface P6 and the inner electrodes 30 in the second direction D2 is greatest in the region R2. This difference is preferably in a range of 5 µm or more and 50 µm or less and more preferably in a range of 10 µm or more and 40 µm or less.

In order to obtain a shape in which the maximum distance between the fifth surface P5 and the inner electrodes 30 in the second direction D2 becomes greater in the region R2 than in the region R1, it is preferable to form a swollen portion EL1 on the fifth surface P5 as in this embodiment. The swollen portion EL1 protrudes in the second direction D2 and is elongated in the first direction D1. Similarly, in order to obtain a shape in which the maximum distance between the sixth surface P6 and the inner electrodes 30 in the second direction D2 becomes greater in the region R2 than in the region R1, it is preferable to form a swollen portion EL2 on the sixth surface P6. The swollen portion EL2 protrudes in the second direction D2 and is elongated in the first direction D1. The occurrence of leaning of the multilayer ceramic capacitor 1 during mounting can be reduced by providing the multilayer ceramic capacitor 1 with the swollen portion EL1 or the swollen portion EL2.

The swollen portion EL1 may be formed integrally with the first side-margin portion WG1 and be made of the same dielectric material. The swollen portion EL1 may also be formed by applying a dielectric ceramic slurry, in a belt-like manner, to a portion of a dielectric sheet for forming the first side-margin portion WG1. Alternatively, the swollen portion EL1 may be formed separately from the first side-margin portion WG1 and be attached to the surface of the first side-margin portion WG1, which enables the swollen portion EL1 to contain a dielectric material having a composition different from that of the first side-margin portion WG1. Similarly, the swollen portion EL2 may be formed integrally with the second side-margin portion WG2 and be made of the same dielectric material. The swollen portion EL2 may be formed by applying the dielectric ceramic slurry, in a belt-like manner, to a portion of a dielectric sheet for forming the second side-margin portion WG2. Alternatively, the swollen portion EL2 may be formed separately from the second side-margin portion WG2 and be attached to the surface of the second side-margin portion WG2, which enables the swollen portion EL2 to contain a dielectric material having a composition different from that of the second side-margin portion WG2.

The most protruding portion of the swollen portion EL1 in the second direction D2 is preferably positioned 50 µm or less from the second surface P2 in the lamination direction T and more preferably positioned 10 µm or more and 50 µm or less. It is preferable that both sides of the most protruding portion of the swollen portion EL1 in the lamination direction T be sloped gently so that the entire swollen portion EL1 can form a curved surface. Similarly, the most protruding portion of the swollen portion EL2 in the second direction D2 is preferably positioned 50 µm or less from the second surface P2 in the lamination direction T and more preferably positioned 10 µm or more and 50 µm or less. It is preferable that both sides of the most protruding portion of the swollen portion EL2 in the lamination direction T be sloped gently so that the entire swollen portion EL2 can form a curved surface.

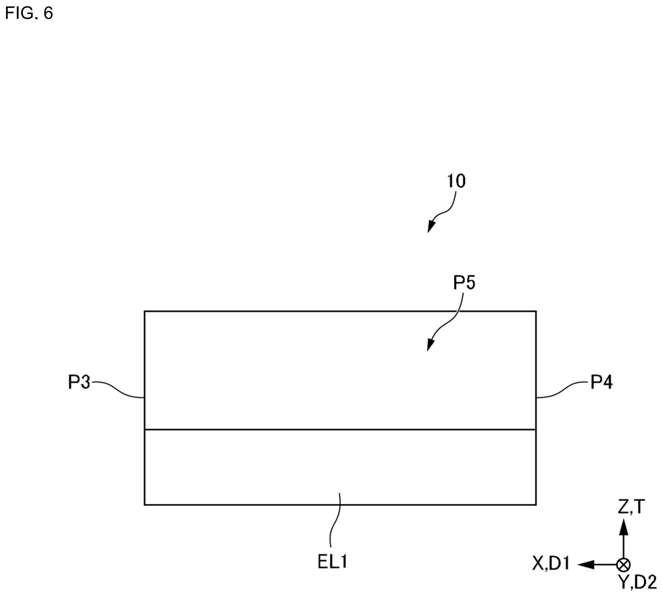

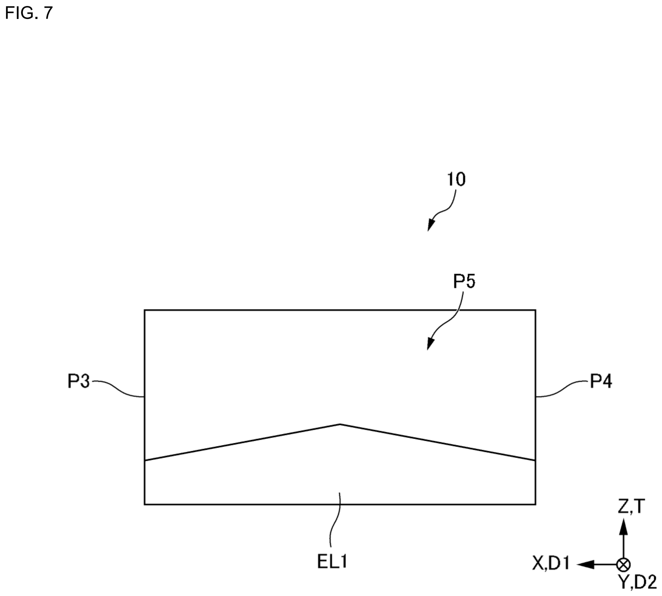

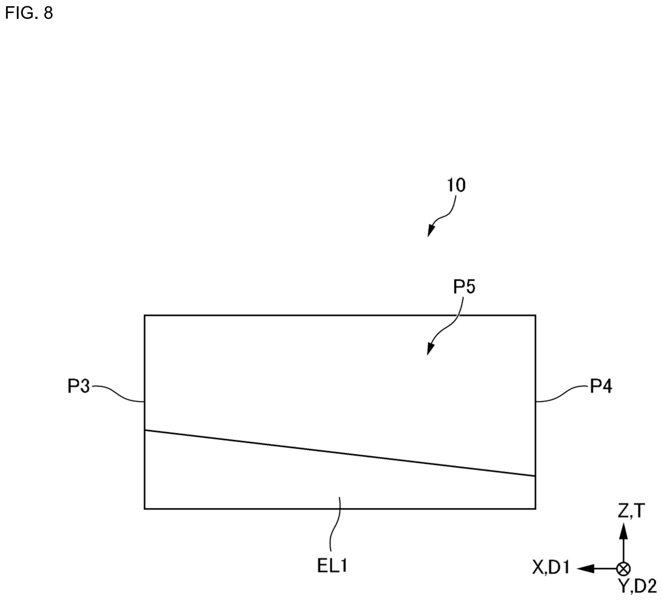

The swollen portion EL1 may be formed such that the width of the swollen portion EL1 in the lamination direction T is constant as illustrated in Fig. 6. The present invention, however, is not limited to this. For example, the width of the swollen portion EL1 in the lamination direction T may change as it goes in the first direction D1 as illustrated in Fig. 7. Alternatively, as illustrated in Fig. 8, the width of the swollen portion EL1 in the lamination direction T may change gradually as it goes in the first direction D1. The same applies to the swollen portion EL2.

In the case in which the first inner electrodes 31 exposed at the third surface P3 and the second inner electrodes 32 exposed at the fourth surface P4 are covered with a dielectric material, it is preferable that the coverage of the dielectric material be higher in the region R2 than in the region R1 (see Fig. 5). For example, the swollen portion EL1 may stretch from the fifth surface P5 continuously to the third surface P3 and to the fourth surface P4 and partially cover the inner electrodes 30 exposed at the third surface P3 and at the fourth surface P4. Similarly, the swollen portion EL2 may stretch from the sixth surface P6 continuously to the third surface P3 and to the fourth surface P4 and partially cover the inner electrodes 30 exposed at the third surface P3 and at the fourth surface P4. Portions of the outer electrodes 40 in the region R2 near the second surface of the multilayer body 10 tend to become thin by forming the swollen portions EL1 and EL2. Despite this, moisture can be prevented from entering the inner electrodes 30 due to the swollen portions EL1 and EL2 partially covering the inner electrodes 30 exposed at the third surface P3 and at the fourth surface P4.

A portion of the multilayer body 10 that stretches 5 µm or less in the lamination direction T from the sub-region where the distance between the fifth surface P5 and the inner electrodes 30 in the second direction D2 is greatest in the region R2 preferably contains more Mg than a portion of the multilayer body 10 that stretches 5 µm or less in the lamination direction T from a sub-region where the distance between the fifth surface P5 and the inner electrodes 30 in the second direction D2 is greatest in the region R1. This can reduce the occurrence of the moisture entering the inner electrodes in the region R2 where the outer electrodes tend to become thin. Identification and measurement of metal elements can be made by elementary analysis using TEM-EDX.

The portion of the multilayer body 10 that stretches 5 µm or less in the lamination direction T from the sub-region where the distance between the fifth surface P5 and the inner electrodes 30 in the second direction D2 is greatest in the region R2 preferably contains more Mn than the portion of the multilayer body 10 that stretches 5 µm or less in the lamination direction T from the sub-region where the distance between the fifth surface P5 and the inner electrodes 30 in the second direction D2 is greatest in the region R1.

When the portion of the multilayer body 10 that stretches 5 µm or less in the lamination direction T from the sub-region where the distance between the fifth surface P5 and the inner electrodes 30 in the second direction D2 is greatest in the region R2 is divided such that the sub-region is divided into two equal parts in the second direction D2, it is preferable that a divided portion near the fifth surface P5 be lower in a total content of Mg and Mn than a divided portion near the sixth surface P6.

An end portion, in the second direction D2, of the inner electrode 30 closest to the first surface P1 and an end portion, in the second direction D2, of the inner electrode 30 closest to the second surface P2 include respective high Mg-content regions. The high Mg-content region of the inner electrode 30 closest to the second surface P2 is preferably greater in size in the second direction D2 than the high Mg-content region of the inner electrode 30 closest to the first surface P1. This can reduce the occurrence of moisture entering the inner electrodes 30 in the region R2 in which the thickness of each outer electrode 40 tends to become thin.

The dielectric ceramic particles contained in a region interposed between the end portions, in the second direction D2, of the two inner electrodes 30 positioned closest to the second surface P2 in the lamination direction T are preferably smaller in particle size D50 than the dielectric ceramic particles contained in a region interposed between the end portions, in the second direction D2, of the two inner electrodes 30 positioned closest to the first surface P1 in the lamination direction T.

A portion of the multilayer body 10 that stretches 5 µm or less in the lamination direction T from the sub-region where the distance between the fifth surface P5 and the inner electrodes 30 in the second direction D2 is greatest in the region R2 is preferably lower in porosity than a portion of the multilayer body 10 that stretches 5 µm or less in the lamination direction T from a sub-region where the distance between the fifth surface P5 and the inner electrodes 30 in the second direction D2 is greatest in the region R1.

When the portion of the multilayer body 10 that stretches 5 µm or less in the lamination direction T from the sub-region where the distance between the fifth surface P5 and the inner electrodes 30 in the second direction D2 is greatest in the region R2 is divided such that the sub-region is divided into two equal parts in the second direction D2, it is preferable that a divided portion near the fifth surface P5 be lower in porosity than a divided portion near the sixth surface P6.

The porosity can be measured in the following manner. A WT cross-section of the multilayer body 10 is observed and a target region is determined. The ratio of the pore areas to the total area of the target region is measured to determine the porosity using an image analysis software package.

The dielectric ceramic particles contained in the portion of the multilayer body 10 that stretches 5 µm or less in the lamination direction T from the sub-region where the distance between the fifth surface P5 and the inner electrodes 30 in the second direction D2 is greatest in the region R2 are preferably smaller in particle size D50 than the dielectric ceramic particles contained in the portion of the multilayer body 10 that stretches 5 µm or less in the lamination direction T from a sub-region where the distance between the fifth surface P5 and the inner electrodes 30 in the second direction D2 is greatest in the region R1.

When the portion of the multilayer body 10 that stretches 5 µm or less in the lamination direction T from the sub-region where the distance between the fifth surface P5 and the inner electrodes 30 in the second direction D2 is greatest in the region R2 is divided such that the sub-region is divided into two equal parts in the second direction D2, it is preferable that the dielectric ceramic particles contained in a divided portion near the fifth surface P5 be smaller in particle size D50 than the dielectric ceramic particles contained in a divided portion near the sixth surface P6. This can increase the density in the region R2 of the side-margin portions WG and thereby lower the center of gravity of the multilayer ceramic capacitor.

The portion of the multilayer body 10 that stretches 5 µm or less in the lamination direction T from the sub-region where the distance between the fifth surface P5 and the inner electrodes 30 in the second direction D2 is greatest in the region R2 preferably contains a larger amount of an element having a higher density than the dielectric ceramic particle compared with the portion of the multilayer body 10 that stretches 5 µm or less in the lamination direction T from a sub-region where the distance between the fifth surface P5 and the inner electrodes 30 in the second direction D2 is greatest in the region R1. For example, the portion of the multilayer body 10 in the region R2 contains Pb(Zr, Ti)O₃. This can increase the density of the side-margin portions WG in the region R2 and thereby further lower the center of gravity of the multilayer ceramic capacitor.

The above dimensions of the portions or regions of the multilayer body 10 can be measured, for example, in the following manner. The multilayer body 10 is ground to expose a WT cross-section near the center of the multilayer body 10 in the first direction D1 or ground to expose an LT cross-section near the center of the multilayer body 10 in the second direction D2, and the cross-section is observed using a scanning electron microscope. The above values can be determined by averaging measurement results at five points in the first direction D1 or in the second direction D2.

### Outer Electrode

The outer electrodes 40 include the first outer electrode 41 and the second outer electrode 42.

The first outer electrode 41 is disposed on the third surface P3 of the multilayer body 10 and is connected to the first inner electrodes 31. The first outer electrode 41 may stretch from the third surface P3 to part of the first surface P1 and to part of the second surface P2. Moreover, the first outer electrode 41 may stretch from the third surface P3 to part of the fifth surface P5 and to part of the sixth surface P6.

The second outer electrode 42 is disposed on the fourth surface P4 of the multilayer body 10 and is connected to the second inner electrodes 32. The second outer electrode 42 may stretch from the fourth surface P4 to part of the first surface P1 and to part of the second surface P2. Moreover, the second outer electrode 42 may stretch from the fourth surface P4 to part of the fifth surface P5 and to part of the sixth surface P6.

The outer electrodes 40 may be structured so as to include base electrode layers 415 and 425 and plating layers 416 and 426 formed thereon, respectively.

Each of the base electrode layers 415 and 425 includes at least one of, for example, a baked layer, an electroconductive resin layer, and a direct-plating layer.

### Baked Layer

The baked layer is a layer formed by applying an electroconductive paste containing glass and metal to the multilayer body 10 and by baking the electroconductive paste. The electroconductive paste may be baked simultaneously with the inner electrodes 30 or after the baking of the inner electrodes 30. The temperature of baking is preferably 700 to 900°C.

The glass component contains at least one of, for example, B, Si, Ba, Mg, Al, and Li. The metal component contains at least one of, for example, Cu, Ni, Ag, Pd, Au, and Ag-Pd alloy.

For example, the thickness of the baked layer is preferably 0.1 µm or more and 200 µm or less. The baked layer may have multiple layers.

### Electroconductive Resin Layer

The electroconductive resin layer may be formed on the baked layer or may be formed directly on the surface of the multilayer body 10. The electroconductive resin layer may have multiple layers.

The electroconductive resin layer may be formed by applying an electroconductive resin paste containing a thermosetting resin and a metal component onto the baked layer or onto the surface of the multilayer body 10 and by heat-curing the electroconductive resin paste at a temperature of 250 to 550°C to set the resin. The heat treatment is preferably conducted under an N₂ atmosphere. The oxygen concentration is preferably controlled to be 100 ppm or less to prevent the resin from scattering and to prevent oxidation of metal components.

For example, the thickness of the electroconductive resin layer at the center of the third surface P3 and of the fourth surface P4 is 10 µm or more and 200 µm or less. For example, the thickness of the electroconductive resin layer at each center, in the first direction D1, of the first surface P1, the second surface P2, the fifth surface P5, and the sixth surface P6 is 5 µm or more and 50 µm or less.

For example, the resin to be used for the electroconductive resin layer is a known thermosetting resin, such as epoxy resin, phenol resin, urethane resin, silicone resin, and polyimide resin. The epoxy resin is one of the most suitable resins among them because of excellence in thermal resistance and moisture resistance as well as adhesion, etc. The amount of the resin contained in the electroconductive resin layer is 25 vol% or more and 65 vol% or less of the total volume of the electroconductive resin.

The electroconductive resin layer preferably contains a hardening agent as well as the thermosetting resin. When the epoxy resin is used as the base resin, the hardening agent may be a phenol-based, amine-based, acid anhydride-based, or imidazole-based compound.

The electroconductive resin layer, which contains the thermosetting resin, is more flexible compared with, for example, an electroconductive layer made of a plated layer or made by baking an electroconductive paste. As a result, cracks can be prevented from occurring in a ceramic electronic component because the electroconductive resin layer serves as a cushioning layer even if the ceramic electronic component is subjected to shocks due to physical impact or heat cycling.

A metal powder contained in the electroconductive resin layer may be made of Ag, Cu, Ni, or an alloy thereof. The metal particles of Cu or Ni may be coated with Ag. In the case of the metal particles of Cu, oxidation prevention treatment may be performed thereon.

The reason for adopting Ag for the electroconductive metal is that Ag is suitable for the electrode material because of its lowest specific resistance and is high in weathering resistance because Ag is a precious metal and not oxidized easily. The reason for using Ag-coated metal particles is to decrease the cost of base metal while maintaining the above advantages of Ag.

The amount of the metal powder contained in the electroconductive resin layer is 35 vol% or more and 75 vol% or less of the total volume of the electroconductive resin.

The shapes of metal particles contained in the electroconductive resin layer are not specifically limited. For example, the metal particles may be spherical or flat. For example, the average particle diameter of the metal powder contained in the electroconductive resin layer is not specifically limited but may be 0.3 µm or more and 10 µm or less.

The metal powder contained in the electroconductive resin layer serves for electrical connection. More specifically, metal particles come into contact with one another in the electroconductive resin layer to establish electrical connection.

### Plating Layer

Plating layers 416 and 426 may be formed directly on the third surface P3 and the fourth surface P4 of the multilayer body 10, respectively, where the inner electrodes 30 are exposed. In other words, the multilayer ceramic capacitor 1 may be structured such that the plating layers 416 and 426 electrically connected directly to the inner electrodes 30. In this case, the direct plating layers may be formed after a pretreatment in which a catalyst being provided on surfaces of the multilayer body 10.

For example, the plating layers 416 and 426 is preferably made of one of metals such as Cu, Ni, Sn, Pb, Au, Ag, Pd, Bi, Zn, and an alloy thereof. For example, in the case of the inner electrodes 30 being made of Ni, the direct plating layer preferably contain Cu, which provides good adhesion to Ni.

Each of the plating layers 416 and 426 preferably has a thickness of 1.0 µm or more and 15 µm or less. The plating layers 416 and 426 preferably do not contain glass. The metal content of the plating layers 416 and 426 is 99 volume% per unit volume.

Although any one of electrolytic plating and electroless plating may be adopted to form the plating layers, the electroless plating has a disadvantage that a pretreatment using a catalyst or the like is required to improve the rate of metal deposition and the plating process becomes complicated. Accordingly, it is preferable to adopt electrolytic plating for normal cases. It is preferable to adopt barrel plating. Upper plating layers may be formed, if necessary, on the base plating layers in the similar manner.

The plating layers 416 and 426 formed on respective base electrode layers 415 and 425 contain, for example, at least one of Cu, Ni, Ag, Pd, Au, and Ag-Pd alloy.

Each of the plating layers 416 and 426 may be formed of multiple layers and preferably has a two-layer structure of, for example, Ni plating and Sn plating. When the ceramic electronic component is mounted, the Ni plating layer can prevent the base electrode layer from being eroded by the solder, and the Sn plating layer can improve the wettability of the solder, which leads to easy mounting. Each of the plating layers is preferably 1.0 µm or more and 15 µm or less.

### Manufacturing Process

Next, an example of a method of manufacturing the above multilayer ceramic capacitor 1 will be described. First of all, a dielectric sheet for the dielectric layers 20 and an electroconductive paste for the inner electrodes 30 are prepared. The dielectric sheet and the electroconductive paste contain a binder and a solvent. Known materials may be used for the binder and the solvent.

Next, for example, a predetermined pattern of the inner electrodes is printed by applying the electroconductive paste onto the dielectric sheet to form conductor traces for the inner electrodes. The pattern of the inner electrodes may be printed using, for example, screen printing or gravure printing.

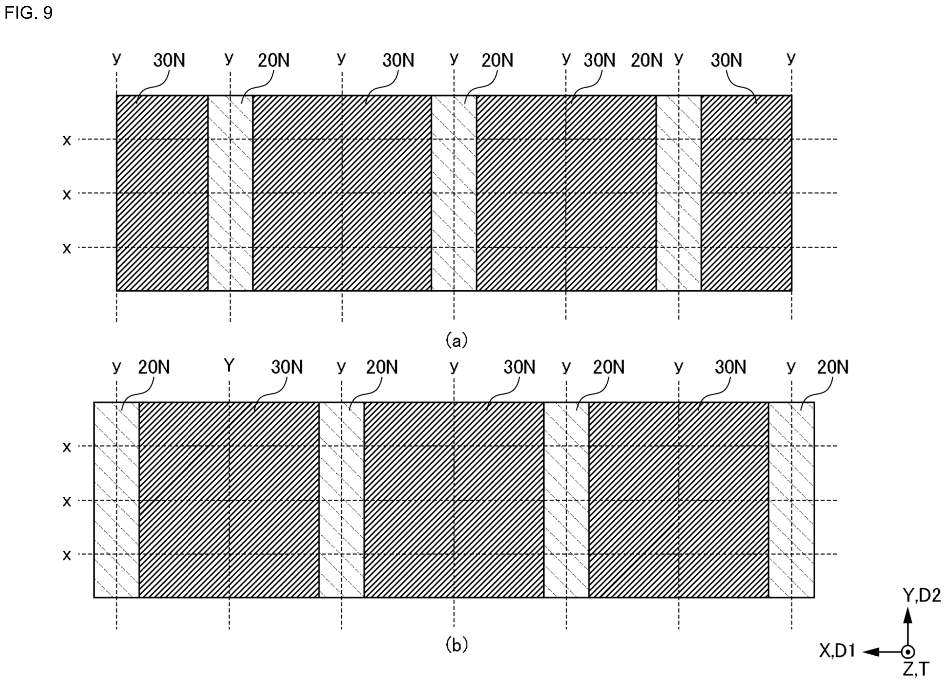

Dielectric sheets having two different patterns of the inner electrodes may be prepared as illustrated in Fig. 9. Paste-application portions 30N to which the electroconductive paste is applied are arranged side by side in the first direction D1 with a gap provided between adjacent paste-application portions 30N. A height-adjustment portion 20N may be formed in the gap by applying the ceramic paste to a thickness almost same as that of the electroconductive paste of the paste-application portions 30N. This can eliminate steps on the dielectric sheet formed by applying the electroconductive paste and smooth the surface of the dielectric sheet on which the electroconductive paste is applied. The two patterns of the inner electrodes are printed such that the two patterns are shifted from each other in the first direction D1 as illustrated in Fig. 9. Two dielectric sheets having different patterns of the inner electrodes are stacked alternately in the lamination direction T and cut in the lamination direction T along cutting lines x and cutting lines y to form inner-layer portions 100, which will be described later.

The paste-application portions 30N to which the electroconductive paste is applied become the first inner electrodes 31 and the second inner electrodes 32 of the inner-layer portion 100 in each multilayer body 10 after baking. The height-adjustment portions 20N become dielectric layers 20z of the inner-layer portion 100, and the dielectric sheet becomes the inner dielectric layers 20i of the inner-layer portion 100.

In order to form an outer layer 200, the dielectric sheets for the second outer layer 202 with no inner electrode printed thereon are stacked to a predetermined number of layers. The dielectric sheets for the inner-layer portion 100 on which two different patterns of the inner electrodes are printed are stacked alternately on the outer layer 200. The dielectric sheets for the first outer layer 201 without having the inner electrodes printed is stacked thereon to a predetermined number of layers. The multilayer sheets are thus prepared. In the case of disposing a dummy electrode in the outer layer 200, a dielectric sheet for the outer layer on which a pattern of the dummy electrode is printed is stacked.

Next, the multilayer sheets are pressed in the lamination direction using an isostatic pressing or the like to form multilayer block. Next, as illustrated in Fig. 9, the multilayer block is cut in the lamination direction T along the cutting line x and the cutting line y to produce multilayer chips 10T of a predetermined size.

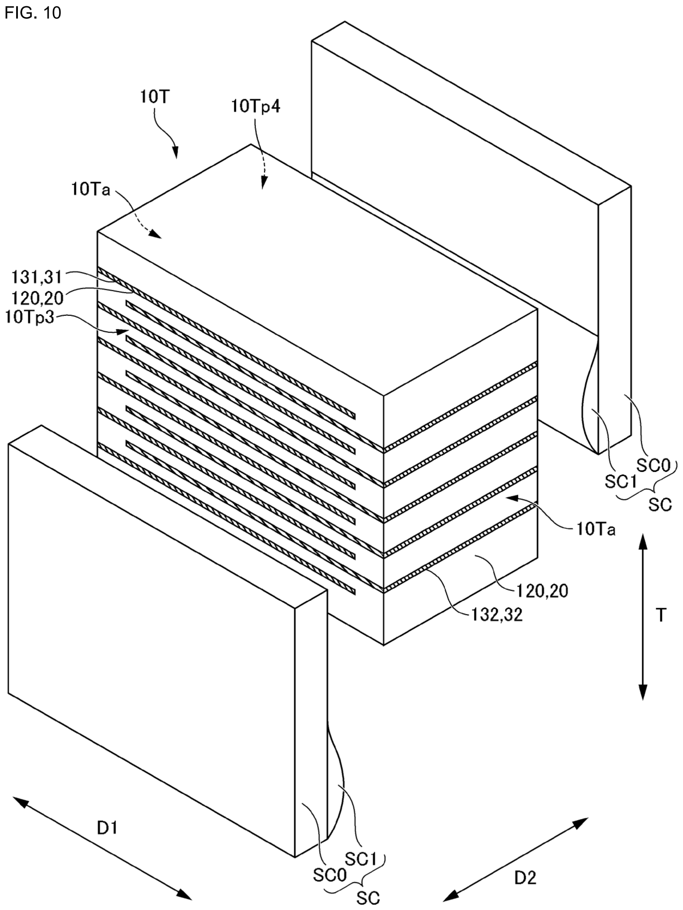

As illustrated in Fig. 10, each multilayer chip 10T is shaped like a cuboid in which two types of ceramic green sheets 120 that become the dielectric layers 20 are laminated alternately. The one type of the ceramic green sheet 120 has conductor traces 131 that become the first inner electrodes 31, and the other type of the ceramic green sheet 120 has conductor traces 132 that become the second inner electrodes 32.

The multilayer chip 10T has a pair of end surfaces 10Ta, and the conductor traces 131 are exposed at one end surface 10Ta, while the conductor traces 132 are exposed at the other end surface 10Ta.

The conductor traces 131 and the conductor traces 132 are exposed at a side surface 10Tp3 of the multilayer chip 10T, and all the ends of the conductor traces 131 and 132 in the second direction D2 are arrayed in the lamination direction T at the side surface 10Tp3.

Similarly, the conductor traces 131 and the conductor traces 132 are exposed at a side surface 10Tp4 of the multilayer chip 10T, and all the ends of the conductor traces 131 and 132 in the second direction D2 are arrayed in the lamination direction T at the side surface 10Tp4.

Side covers SC are attached to the side surfaces 10Tp3 and 10Tp4 of the multilayer chip 10T. The side covers SC that cover the side surfaces 10Tp3 and 10Tp4 later become the first side-margin portion WG1 and the second side-margin portion WG2, respectively.

The side covers SC can be obtained by printing a paste-print portion SC1 on a ceramic sheet SC0 for the side-margin portion WG by applying a ceramic paste to a predetermined area on the ceramic sheet SC0 and by drying the ceramic paste thereafter. The side covers SC are pressed against the side surfaces 10Tp3 and 10Tp4 of the multilayer chip 10T and punched out.

The ceramic slurry for forming the ceramic sheet SC0 and the ceramic paste for forming the paste-print portion SC1 are made of a dielectric ceramic material that can be prepared in the following manner: a perovskite compound containing Ba and Ti is pulverized to obtain a dielectric powder, and the dielectric powder is mixed with a predetermined amount of additives such as a binder resin, an organic solvent, a plasticizer, and a dispersant.

The paste-print portion SC1 is formed by applying the ceramic paste onto the surface of the ceramic sheet SC0 in a belt-like manner to a width of 200 µm in such a manner that the position at which the dimension of the side-margin portions WG in the second direction D2 is greatest comes to the center of the belt of the 200 µm width. The above formation of the paste-print portion SC1 is carried out with imaging observation of the conditions of the side surfaces 10Tp3 and 10Tp4 of the multilayer chip 10T. The application of the ceramic paste is not limited to the above. For example, the ceramic sheet SC0 is partially made thinner, and the ceramic paste may be applied to the thinned portion.

The side cover SC can be formed by pressing the ceramic sheet SC0 having the paste-print portion SC1 thereon against the multilayer chip 10T with the paste-print portion SC1 coming into contact with the side surfaces 10Tp3 and with the side surface 10Tp4 to perforate the ceramic sheet SC0. When the ceramic sheet SC0 is attached to the multilayer chip 10T, the paste-print portion SC1 is not necessarily brought into contact with the side surface 10Tp3 and with the side surface 10Tp4. The side of the ceramic sheet SC0 on which the paste-print portion SC1 is not formed may be brought into contact with the side surface 10Tp3 and with the side surface 10Tp4.

When the ceramic sheet SC0 having the paste-print portion SC1 is pressed against the multilayer chip 10T and perforated, the paste-print portion SC1 and the ceramic sheet SC0 can be perforated smoothly by concentrating the pressure onto the paste-print portion SC1. The position at which the dimension in the second direction D2 is greatest in the side-margin portion WG can be adjusted by regulating the pressure applied to the paste-print portion SC1.

The above has described an example in which the side cover SC has a two-layer structure of the ceramic sheet SC0 and the paste-print portion SC1. The side cover, however, may be formed to have three or more layers an additional layer of the ceramic sheet SC0.

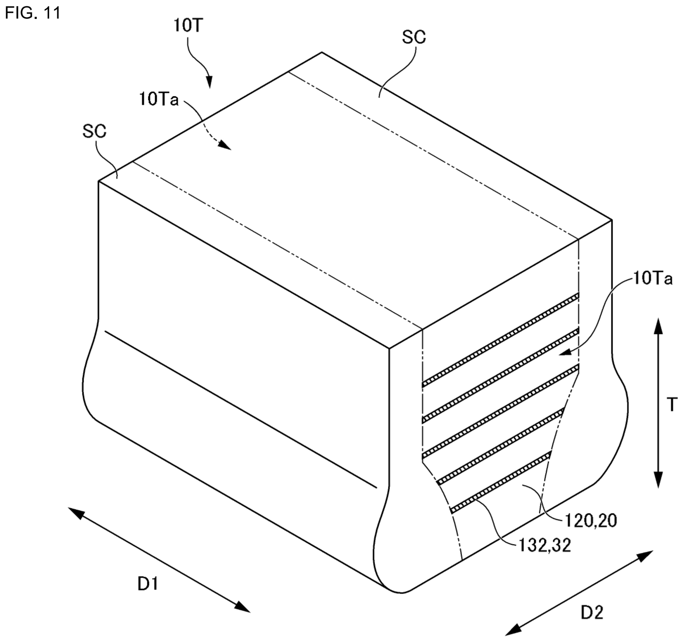

An unbaked multilayer chip 10T having the side covers SC is thus formed as illustrated in Fig. 11. As illustrated, the conductor traces 131 and 132 exposed at the opposite end surfaces 10Ta of the multilayer chip 10T are preferably covered with the dielectric material more widely in a region corresponding to the region R2 of the multilayer body 10 than in a region corresponding to the region R1 of the multilayer body 10. The side cover SC obtained by forming the paste-print portion SC1 on the ceramic sheet SC0 is thicker in the second direction D2 at the paste-print portion SC1. As a result, when the ceramic sheet SC0 having the paste-print portion SC1 is pressed against the multilayer chip 10T and a pressure is applied further onto the paste-print portion SC1, the paste-print portion SC1 flows toward the end surfaces 10Ta and covers part of the conductor traces 131 and 132 exposed at the end surfaces 10Ta in a region corresponding to the region R2 of the multilayer body 10. The multilayer chip 10T is baked to produce the multilayer body 10. The baking temperature depends on the dielectric material and the material of the inner electrodes but is preferably 900°C or higher and 1400°C or lower.

Next, the third surface P3 of the multilayer body 10 is immersed by dipping in an electroconductive paste, which is the electrode material for the base electrode layer, to apply the electroconductive paste for the base electrode layer 415 onto the third surface P3. Similarly, the fourth surface P4 of the multilayer body 10 is immersed by dipping in the electroconductive paste, which is the electrode material for the base electrode layer, to apply the electroconductive paste for the base electrode layer 425 onto the fourth surface P4. The electroconductive pastes are then baked to form the baked layers, in other words, the base electrode layers 415 and 425. The baking temperature is preferably 600°C or higher and 900°C or lower.

As described above, the base electrode layers 415 and 425, which are resin layers, may be formed by applying the electroconductive paste containing electroconductive particles and a thermosetting resin and by baking the electroconductive paste. Alternatively, thin film layers for the base electrode layers 415 and 425 may be formed using a film formation method such as sputtering or vapor deposition.

The plating layer 416 is formed on the surface of the base electrode layer 415 to form the first outer electrode 41, and the plating layer 426 is formed on the surface of the base electrode layer 425 to form the second outer electrode 42. The multilayer ceramic capacitor 1 is thus obtained.

The embodiments of the present invention have been described. The present invention, however, is not limited to the above embodiments and can be implemented in various other forms without departing from the gist of the present invention.

## Claims

1. A multilayer ceramic capacitor comprising:
a multilayer body having
a first surface and a second surface that face oppositely in a lamination direction,
a third surface and a fourth surface that face oppositely in a first direction orthogonally intersecting the lamination direction, and
a fifth surface and a sixth surface that face oppositely in a second direction orthogonally intersecting the lamination direction and the first direction;
a first outer electrode disposed on the third surface; and
a second outer electrode disposed on the fourth surface, wherein
a dimension of the multilayer body in the lamination direction is greater than a dimension thereof in the second direction,
the multilayer body includes therein inner electrodes arranged in the lamination direction,
an amount of deviation of an end of each inner electrode in the second direction is 0.5 µm or less,
dielectric ceramic particles are present between the fifth surface and the inner electrodes, and
when the multilayer body is divided in the lamination direction equally into a region R1 closer to the first surface and a region R2 closer to the second surface, a concentration of an additive being present between the fifth surface and the inner electrodes is higher in the region R2 than in the region R1.

2. The multilayer ceramic capacitor according to Claim 1, wherein
a maximum distance between the fifth surface and the inner electrodes in the second direction is greater in the region R2 than in the region R1.

3. The multilayer ceramic capacitor according to Claim 1 or 2, wherein
a portion of the multilayer body that stretches 5 µm or less in the lamination direction from a sub-region where the distance between the fifth surface and the inner electrodes in the second direction is greatest in the region R2 contains a higher amount of Mg than a portion of the multilayer body that stretches 5 µm or less in the lamination direction from a sub-region where the distance between the fifth surface and the inner electrodes in the second direction is greatest in the region R1.

4. The multilayer ceramic capacitor according to any one of Claims 1 to 3, wherein
an end portion of an inner electrode closest to the first surface and an end portion of an inner electrode closest to the second surface, both end portions being positioned in the second direction, include respective high Mg-content regions, and
the high Mg-content region of the inner electrode closest to the second surface is preferably greater in size in the second direction than the high Mg-content region of the inner electrode closest to the first surface.

5. The multilayer ceramic capacitor according to any one of Claims 1 to 4, wherein
the portion of the multilayer body that stretches 5 µm or less in the lamination direction from the sub-region where the distance between the fifth surface and the inner electrodes in the second direction is greatest in the region R2 contains a higher amount of Mn than the portion of the multilayer body that stretches 5 µm or less in the lamination direction from the sub-region where the distance between the fifth surface and the inner electrodes 30 in the second direction is greatest in the region R1.

6. The multilayer ceramic capacitor according to any one of Claims 1 to 5, wherein
dielectric ceramic particles contained in a region interposed between end portions of two inner electrodes positioned closest to the second surface in the lamination direction, the end portions being positioned in the second direction, are smaller in particle size D50 than dielectric ceramic particles contained in a region interposed between end portions of two inner electrodes positioned closest to the first surface in the lamination direction, the end portions being positioned in the second direction.

7. The multilayer ceramic capacitor according to any one of Claims 1 to 6, wherein
when the portion of the multilayer body that stretches 5 µm or less in the lamination direction from the sub-region where the distance between the fifth surface and the inner electrodes in the second direction is greatest in the region R2 is divided such that the sub-region is divided into two equal parts in the second direction, a divided portion near the fifth surface is lower in a total content of Mg and Mn than a divided portion near the sixth surface.

8. The multilayer ceramic capacitor according to any one of Claims 1 to 7, wherein
the portion of the multilayer body that stretches 5 µm or less in the lamination direction from the sub-region where the distance between the fifth surface and the inner electrodes in the second direction is greatest in the region R2 is lower in porosity than the portion of the multilayer body that stretches 5 µm or less in the lamination direction from the sub-region where the distance between the fifth surface and the inner electrodes in the second direction is greatest in the region R1.

9. The multilayer ceramic capacitor according to any one of Claims 1 to 8, wherein
when the portion of the multilayer body that stretches 5 µm or less in the lamination direction from the sub-region where the distance between the fifth surface and the inner electrodes in the second direction is greatest in the region R2 is divided such that the sub-region is divided into two equal parts in the second direction, the divided portion near the fifth surface is lower in porosity than the divided portion near the sixth surface.

10. The multilayer ceramic capacitor according to any one of Claims 1 to 9, wherein
when the portion of the multilayer body that stretches 5 µm or less in the lamination direction from the sub-region where the distance between the fifth surface and the inner electrodes in the second direction is greatest in the region R2 is divided such that the sub-region is divided into two equal parts in the second direction, dielectric ceramic particles contained in the divided portion near the fifth surface are smaller in particle size D50 than dielectric ceramic particles contained in the divided portion near the sixth surface.

11. The multilayer ceramic capacitor according to any one of Claims 1 to 10, wherein
When the portion of the multilayer body that stretches 5 µm or less in the lamination direction from a sub-region where the distance between the fifth surface and the inner electrodes in the second direction is greatest in the region R2 contains a larger amount of an element having a higher density than the dielectric ceramic particle compared with a portion of the multilayer body that stretches 5 µm or less in the lamination direction from a sub-region where the distance between the fifth surface and the inner electrodes in the second direction is greatest in the region R1.
